# EUROPEAN PATENT SPECIFICATION

(11) **EP 4 209 700 B1**
(45) Date of publication and mention of the grant of the patent: **23.04.2025**
(21) Application number: 22208065.7
(22) Date of filing: 17.11.2022
(51) Int. Cl.: F16L 37/248, F16B 7/20

(54) **CONNECTING STRUCTURE**
VERBINDUNGSSTRUKTUR
STRUCTURE DE CONNEXION

(30) Priority: 05.01.2022 JP 2022000494
(43) Date of publication of application: 12.07.2023
(73) Proprietor: YJS CO., LTD., Yodogawa-ku Osaka-shi Osaka 5320021 (JP)
(72) Inventor: Tsutsui, Gen, Osaka-shi, Osaka, 5320021 (JP); Yonezawa, Ikuhiro, Osaka-shi, Osaka, 5320021 (JP); Dinh, Thi thu trang, Osaka-shi, Osaka, 5320021 (JP); Kameyama, Shuji, Osaka-shi, Osaka, 5320021 (JP)
(74) Representative: Grünecker Patent- und Rechtsanwälte PartG mbB

(56) References cited:
- EP-A1- 0 634 601
- WO-A1-01/61235
- US-A1- 2003 233 718
- US-B1- 6 206 433

## Description

The present invention relates to a connecting structure for connecting together a first member and a second member.

### [BACKGROUND ART]

Among known connecting structures capable of locking together, while being connected together, one and another member, the structures disclosed in the below-identified Patent Documents 1 to 3 are proposed for example.

In the structure disclosed in the below-identified Patent Document 1, protrusions 2, 12, 22 are formed on the outside of the end portion of a duct 1, 11, 21; guide grooves 4, 14, 24 are formed on another duct 3, 13, 23; and on the deeper portions of the guide grooves 14, engaging portions 6, 16, 26 each having a neck portion 5, 15, 25 having a width slightly smaller than the width of the protrusions 2, 12, 22 are provided. The ducts are locked together by guiding the protrusions 2, 12, 22 formed on the duct 1, 11, 21 along the guide grooves 4, 14, 24, and pushing them into the engaging portions 6, 16, 26 while expanding the neck portions 5, 15, 25 (see, for example, Figs. 1 to 10 of Patent Document 1).

In the arrangement disclosed in the below-identified Patent Document 2, a protrusion 14 is formed on the outer peripheral surface of a male pipe body 13 of one of the main pipes 12 connected to one of the suction pipes 11; a groove 24 for guiding the protrusion 14 formed on the male pipe body 13 is formed at the distal end of a female pipe body 21 of the other main pipe connected to the other of the pair of suction pipes 11; and a retaining body 32 is formed including a semicircular hook-shaped catching portion 34 protruding from a circumferential portion of the groove 24. The distance between the tip of the catching portion 34 and a retaining receiving portion 31 opposed to the catching portion 34 is slightly smaller than the axial length of the protrusion 14 formed on the male pipe body 13. Thus, once the protrusion 14 is pushed over the catching portion 34 into the space between the axially opposed retaining receiving portion 31 and the proximal portion of the retaining body 32, the catching portion 34 maintains the fitting state (see, for example, Figs. 1 and 2 of Patent Document 2).

In the arrangement disclosed in Patent Document 3, outwardly extending protrusions 23 are formed on the fitted portion 21 of the mating connector C2; elongated holes 32 are formed in the snap ring 30; and on the guide surface 33 of the inner surface of each elongated hole 32, there are formed a cam surface 33a, a mountain-shaped surface 33b directly connected to the terminal portion of the cam surface 33a, and a concave engaging surface 33c continuing to the cam surface 33a through the mountain-shaped surface 33b. Inside the snap ring 30, a spring body 50 is provided which biases the snap ring 30 in the direction opposite to the connecting direction with the mating connector C2. Thus, once the mountain-shaped surface 33b moves over each outwardly extending protrusion 23 and the engaging surface 33c engages the outwardly extending protrusion 23, the snap ring is locked in position under the biasing force of the spring body 50 (see, for example, Figs. 6 to 9 of Patent Document 3 of Patent Document 3).

### [PRIOR ART DOCUMENTS]

### [PATENT DOCUMENTS]

Patent Document 1: Unexamined Japanese Patent Publication No. S64-5180
Patent Document 2: Unexamined Japanese Patent Publication No. S64-35196
Patent Document 3: Japanese Patent No. 3292462
From document WO 01/61235 A1 it is known a connecting structure for connecting a socket with a spigot. The spigot can be seen as a first member which has a connecting end portion and the socket member can be seen as a second member. The first member comprises a first protruding portion, and a first fitting portion is formed on the second member. The first protruding portion is fitted to the first fitting portion. Furthermore, the spigot/first member comprises a second protruding portion and the second member has a second fitting portion such that with the first protruding portion fitted to the first fitting portion, the second protruding portion is fitted to the second fitting portion so as to keep the first protruding portion fitted to the first fitting portion.
Document US 2003/233718 A1 discloses a twist-lock handle assembly that includes sections that are interconnected with each other. A connecting structure for connecting a first member with a second member is disclosed. The first member has a first protruding portion, and a first fitting portion is formed respectively on the connecting end portion and the second member such that with the first protruding portion fitted to the first fitting portion, a separation of the first member from the second member is prevented. In addition to this, a second protruding portion is used, and a second fitting portion is formed respectively on the connecting end portion and the second member such that when the first protruding portion is fitted to the first fitting portion, the second protruding portion is inseparably fitted to the second fitting portion so as to keep the first protruding portion fitted to the first fitting portion.
Document EP 0 634 601 A1 discloses a connecting structure for connecting a first member with a second member characterized in that a first protruding portion and a first fitting portion are formed, respectively, on the connecting end portion and the second member such that, with the first protruding portion fitted to the first fitting portion, a separation of the first member from the second member is prevented. Also, a kind of second protruding portion is disclosed, and a second fitting portion is formed respectively on the connecting end portion and the second member such that, with the first protruding portion fitted to the first fitting portion, the second protruding portion is fitted to the second fitting portion so as to keep the first protruding portion fitted to the first fitting portion.
Document US 6 206 433 B1 refers to a coupling for connecting conduits that carry combustion air to an internal combustion engine. Two conduits are used, a first one having an associated locking collar with slots and flexible locking fingers, and a second one having several outwardly facing pins and catches located on an outer surface thereof. The pins are received in the slots and the two conduits are rotated with respect to each other. In addition to this, the catches and locking fingers engage to prevent the two conduits from being pulled apart. A connecting structure is defined with a first member and a second member. The first member has a first protruding portion and second protruding portion.

### [SUMMARY OF THE INVENTION]

### [OBJECT OF THE INVENTION]

In each of the arrangements according to Patent Documents 1-3, the locked state (fitting state) between the connected portions could be relatively easily released by rotating the connected portions relative to each other in the reverse direction, and as a result, the connected portions could be unexpectedly uncoupled from each other.

An object of the present invention is to ensure that the connected portions are, once locked together, kept in the locked state.

In order to achieve this object, the present invention provides a connecting structure with the features of claim 1.

In this arrangement, the fitting between the second protruding portion and the second fitting portion ensures that the first member and the second member are kept in the locked position, thereby preventing separation of the first and second members.

According to the invention, once in the fitting position in which the first protruding portion and the first fitting portion are fitted together, the first protruding portion is prevented from moving in the insertion direction relative to the first fitting portion, and thus can be stably kept in the locked position.

In the arrangement in which the insertion direction and the fitting direction are defined as described above,
the second protruding portion is preferably formed integrally with the first protruding portion on the opposite side of the insertion direction in which the first protruding portion is inserted into the first fitting portion.

With this arrangement, when connecting the first member and the second member together, the second protruding portion formed on the first member is less likely to contact the second member, and thus prevented from damage.

According to the invention, the arrangement ensures predetermined rigidity around the first fitting portion when the first protruding portion is fitted into the first fitting portion, thereby preventing damage around the first fitting portion during the fitting.

Furthermore, according to the invention, the arrangement of the tunnel shaped insertion channel allows predetermined deformation in the vicinity of the tunnel-shaped insertion channel when the second protruding portion is fitted to the second fitting portion, thereby allowing smooth fitting of the first protruding portion and the second protruding portion to the first fitting portion and the second fitting portion, while preventing the second protruding portion from coming off of the second fitting portion due to excessive deformation in the vicinity of the second fitting portion.

In the arrangement in which the insertion direction and the fitting direction are defined as described above,
the second protruding portion may be formed on the rear end, with respect to the fitting direction, of the first protruding portion, and the second fitting portion may be a step formed on a portion of an inner edge of the first fitting portion on the connecting side to the first member.

With this arrangement, due to the engagement between the second protruding portion and the step formed on the second fitting portion, the second member is locked to the first member.

In the arrangement in which the insertion direction and the fitting direction are defined as described above,
preferably, on the portion of the inner edge of the first fitting portion on the connecting side to the valve body, a taper is formed such that the width of the first fitting portion in the insertion direction decreases in the fitting direction.

With this arrangement, the taper guides the first member in the connecting direction, and the first member is smoothly connected.

In the arrangement of the invention, the second protruding portion is a rib extending from the first protruding portion in the direction opposite to the insertion direction of the connecting end portion, and the second fitting portion is a groove extending along the second protruding portion.

With this arrangement, with the second protruding portion, in the form of a rib, fitted in the groove-shaped second fitting portion, relative displacement between the first member and the second member in the fitting direction can be locked reliably.

In the arrangement in which the second protruding portion is a rib, and the second fitting portion is a groove,
preferably, the second protruding portion has, on the side of the fitting direction, an inclined portion of which the radially outward protruding amount decreases toward its end, and on the opposite side in the fitting direction, a radially outwardly rising protrusion-side wall portion is formed, and
the second fitting portion has a fitting-side wall portion which is, with the second fitting portion extending along the second protruding portion, and with the second protruding portion fitted to the second fitting portion, configured to be opposed to the protrusion-side wall portion (28).

With this arrangement, the tapered portion formed on the second protruding portion temporarily deforms the vicinity of the second fitting portion, thereby allowing the second protruding portion to be smoothly fitted to the second fitting portion. Moreover, once the second protruding portion and the second fitting portion are fitted together, the protrusion-side wall portion formed on the second protruding portion abuts the fitting-side wall portion formed on the second fitting portion, thereby preventing relative displacement in the reverse direction, so as to reliably keep the second protruding portion and the second fitting portion fitted together.

According to the invention, the first fitting portion is a through hole extending to the outer surface of the second member.

With this arrangement, the fitting state of the first protruding portion to the first fitting portion can be visually directly checked.

In each of the above arrangements,
the first fitting portion preferably has an inner peripheral edge thereof rounded.

This avoids local stress concentration on the inner edge of the first fitting portion when the first protruding portion is fitted, which in turn avoids cracks and other trouble on the inner edge of the first fitting portion.

In each of the above arrangements,
preferably, the connecting structure further includes an elastic member disposed between the first member and the second member so as to bias the first member and the second member in the direction away from each other.

With this arrangement, the biasing force of the elastic member further strongly fits together the first protruding portion and the first fitting portion in the fitting position, thereby more stably locking together the first and second members.

In each of the above arrangements,
preferably, the connecting end portion is cylindrically shaped, and when the first member and the second member rotate relative to each other about an axis thereof until the first protruding portion and the first fitting portion are fitted together, the second member is prevented from being axially pulled out of the first member.

With this arrangement, compared to an arrangement in which the first member and the second member are connected together by screwing one into the other, the two members can be reliably connected together with a smaller amount of rotation.

### [ADVANTAGES OF THE INVENTION]

By utilizing the above-described connecting structure according to the present invention, connected portions of a first member and a second member can be kept in a locked state in a reliable manner.

### [BRIEF DESCRIPTION OF THE DRAWINGS]

Fig. 1 is an exploded perspective view (of a portion) of a valve using the connecting structure according to the present invention.
Figs. 2A to 2C show a further portion of the valve shown in Fig. 1 as viewed from radially outside, of which Fig. 2A shows a state in which a valve body is separated from a coupling, Fig. 2B shows a state in which the coupling is inserted into the valve body; and Fig. 2C shows a fitting state of the valve body and the coupling.
Fig. 3A to 3D show a still further portion of the valve shown in Fig. 1, as seen from an axial direction, of which Fig. 3A shows the coupling, Fig. 3B shows a portion of Fig. 3A, Fig. 3C shows the valve body, and Fig. 3D shows a portion of Fig. 3C.
Figs. 4A and 4B show a valve body of the valve shown Fig. 1, of which Fig. 4A is a view as seen in an axial direction, and Fig. 4B is a view as seen in a diametrical direction.
Figs. 5A to 5D are perspective views showing the connecting steps of the valve, of which Fig. 5A shows the state of the first protruding portion being inserted into the first fitting portion, Fig. 5B shows the state of the valve body and the coupling beginning to rotate relative to each other, Fig. 5C shows a state of the second protruding portion beginning to radially expanding the coupling, and Fig. 5D shows the state of the second protruding portion being fitted to the second fitting portion.
Figs. 6A to 6C show another example of the portion of the valve shown in Fig. 1, as viewed from radially outside, of which Fig. 6A shows a state in which the valve body and the coupling are separated from each other, Fig. 6B shows a state in which the valve body is inserted into the coupling, and Fig. 6C shows a fitting state of the valve body and the coupling.
Figs. 7A and 7B show a modified example of the connecting structure shown in Figs. 2A to 2C, as viewed from radially outside, of which Fig. 7A shows a state of the valve body and the coupling beginning to rotate relative to each other, and Fig. 7B shows the state of the second protruding portion being fitted to the second fitting portion.
Fig. 8 shows a modified example of the connecting structure shown in Figs. 7A and 7B, as viewed from radially outside.
Fig. 9 is a perspective view of a further modified example of the connecting structure shown in Figs. 2A to 2C.
Fig. 10 shows a still further modified example of the connecting structure shown in Figs. 2A to 2C, as viewed from radially outside.
Figs. 11A and 11B are perspective views showing another usage of the connecting structure according to the present invention, of which Fig. 11A shows a state of a container body and a lid being separated from each other, and Fig. 11B shows a state of the container body and the lid being in a fitting state.

### [EMBODIMENT]

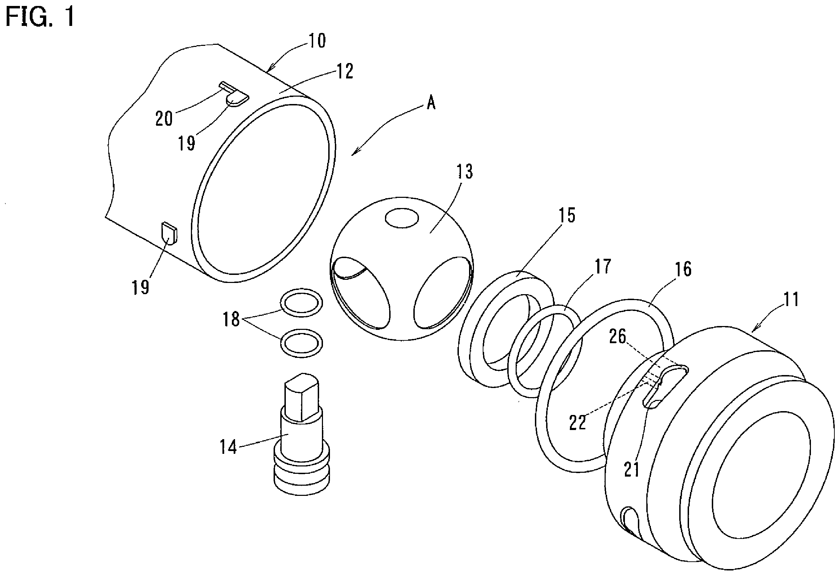

The connecting structure according to the present invention is described with reference to the drawings. This connecting structure is applicable, for example, to a valve assembly A shown in Fig, 1 (such as a three-way valve). Fig. 1 shows only some portions of the valve assembly A. The valve assembly A includes a valve body 10 as a first member 10, and a resin coupling 11 as a second member 11. The valve body 10 has a cylindrical connecting end portion 12 through which a fluid passes, and the coupling 11 is connected to the connecting end portion 12 of the valve body 10.

The valve assembly A includes a ball valve 13 received in the valve body 10, a rotary shaft 14 for rotating the ball valve 13 in the valve body 10, a seat packing 15 on which the ball valve 13 is seated, and seal members 16 and 17, as elastic members 16 and 17, which are disposed, respectively, between the valve body 10 and the coupling 11, and between the seat packing 15 and the coupling 11. The rotary shaft 14 carries seal members 18 to provide a hermetic seal between the valve body 10 and the rotary shaft 14. The rotary shaft 14 carries, at its end protruding out of the valve body 10, a rotating means (not shown) such as a motor or a handle for rotating the rotary shaft 14 about its axis. The seat packing 15 is composed of a fluororesin.

The seal members 16 and 17, which are disposed, respectively, between the valve body 10 and the coupling 11, and between the seat packing 15 and the coupling 11, may not be necessary if the coupling 11 is composed of a metal and thus provides high dimensional accuracy. However, if, as in the valve assembly A of the present invention, a resin coupling 11, which is poor in dimensional accuracy compared to a metal coupling, is used, the seal members 16 and 17 are necessary parts for compensating for dimensional errors of the coupling 11. By connecting together the valve body 10 and the coupling 11 against the elastic force (biasing force) of the seal members 16 and 17, the valve body 10 and the coupling 11 are biased by the seal members 16 and 17 in the direction away from each other.
If necessary or appropriate, the number of the seal members 16 and 17 (two in the embodiment) may be changed.

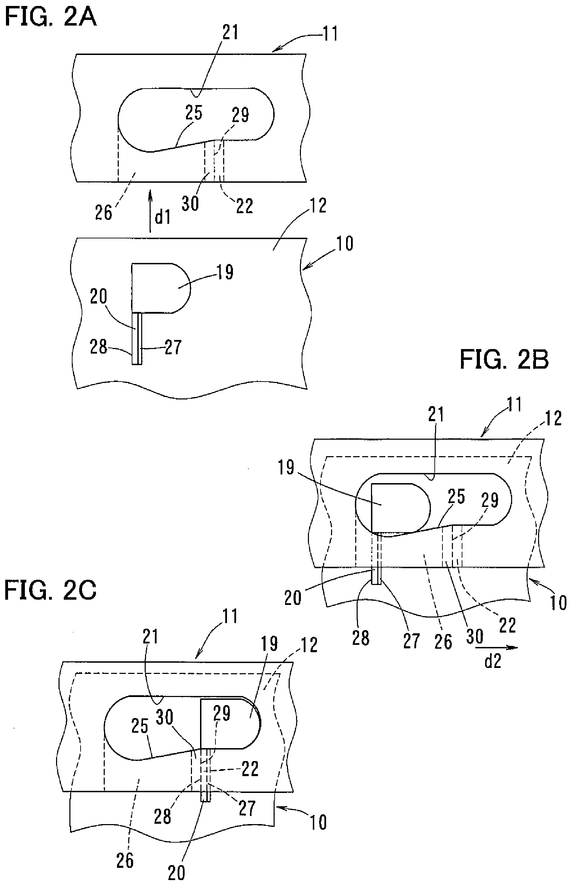

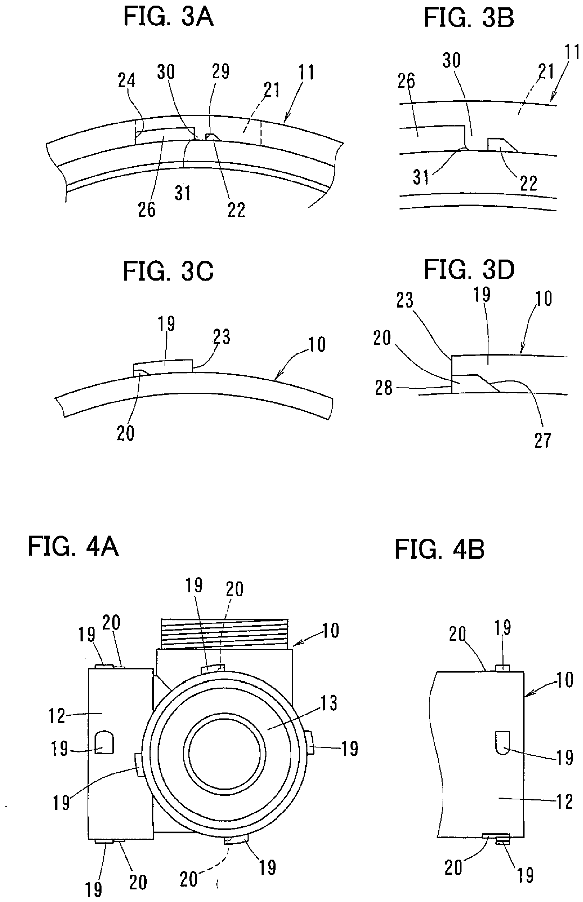

As shown in Figs. 2A to 2C, 3A to 3D, 4A and 4B, on the outer peripheral surface of the connecting end portion 12 of the valve body 10, radially outwardly protruding four first protruding portions 19 and two second protruding portions 20 are formed. The coupling 11 is formed with four first fitting portions 21 and two second fitting portions 22.

The first protruding portions 19 are, as seen in the radial direction of the connecting end portion 12, cannon shell-shaped protrusions with one circumferential end side thereof semi-circular and the other circumferential end side rectangular. The perimeter of each first protruding portion 19 is surrounded by a wall portion 23 rising vertically from the outer peripheral surface of the connecting end portion 12. The protruding heights of the first protruding portions 10 are, though depending on the size of the valve assembly A, about 1 to 3 mm for example. The four first protruding portions 19 are arranged at 90-degree intervals in the circumferential direction of the connecting end portion 12 of the valve body 10.

The first fitting portions 21 are circumferentially elongated holes formed in the coupling 11 near its end. The first fitting portions 21 extend through the coupling 11 to its outer periphery. The first fitting portions 21 have their inner peripheral edges rounded. The inner edge of each of the first fitting portions 21 is a wall portion 24 extending perpendicular to the above outer periphery. On the portion of the inner edge of each of the first fitting portions 21 on the connecting side to the valve body 10, a taper 25 is formed such that the axial width of the first fitting portion 21 decreases toward the fitting position of the first protruding portion 19 with the first fitting portion 21.

A portion of the wall portion 24 between the fitting position and the taper 25 of the first fitting portion 21 is a flat surface perpendicular to the axial direction. This flat surface of the wall portion 24 is configured, when the first protruding portion 19 is fitted to the first fitting portion 21, to be brough into surface contact with the portion of the wall portion 23 of the first protruding portion 19 on the other circumferential end side (rectangular portion) thereof.

Formed on one circumferential end side of each of the first fitting portions 21 (end portion opposite from the fitting position of the first protruding portion 19 with the first fitting portion 21) is a tunnel-shaped (i.e., not extending to the outer peripheral surface of the coupling) insertion channel 26 connecting with the first fitting portion 21, and extending axially to the end of the coupling 11. The circumferential width of the insertion channel 26 is such that the first protruding portion 19 can pass axially therethrough with a slight play. The four first fitting portions 21 are formed, corresponding to the positions of the respective first protruding portions 19, at angular intervals of 90 degrees in the circumferential direction of the end of the coupling 11.

The axial width of each first protruding portion 19 and the width of the first fitting portion 21 at the fitting position (position shown in Fig. 2C) may be substantially equal to each other. However, in an arrangement in which, as in the embodiment, the valve body 10 and the coupling 11 are biased by the seal members 16 and 17 in the direction away from each other, the axial width of the first fitting portion 21 at the fitting position may be slightly larger than the axial width of the first protruding portion 19.

Each second protruding portion 20 is a rib extending, at the rear end of the other end side of the corresponding first protruding portion 19, in the opposite direction to the insertion direction (shown by arrow d1 in Fig. 2A) of the first protruding portion 19 into the first fitting portion 21. The second protruding portions 20 are integral with the corresponding first protruding portions 19, and are positioned so as be completely hidden axially behind the first protruding portions 19. On the side of the fitting direction of the first protruding portion 19 in which the first protruding portion 19 is fitted to the first fitting portion 21 (rotational direction of the valve body 10 relative to the coupling 11; direction indicated by the arrow d2 in Fig. 2B), the second protruding portion 20 has an inclined portion 27 of which the radially outward protruding amount decreases toward its circumferential end. On the opposite side in the fitting direction, a radially outwardly rising protrusion-side wall portion 28 is formed.

The second protruding portions 20 are each integral with the corresponding first protruding portion 19 at the other end side (opposite side in the fitting direction) of the first protruding portion 19. The protruding height of the second protruding portion 10 from the above outer peripheral surface is set to, for example, about 0.2 mm, though this value may slightly vary depending on e.g., the material of the coupling 11. The two second protruding portions 20 are formed, respectively, on two diametrically opposed ones of the four first protruding portions 19, which are arranged at 90-degree angular intervals, and the remaining two first protruding portions 19 are free of the second protruding portion 20.

The second fitting portions 22 are grooves axially extending parallel to (namely in the same direction as) the second protruding portions 20. The second fitting portions 22 each communicate, at one end thereof, with the corresponding first fitting portion 21 and extends to the end of the coupling 11. On the inner side of the second fitting portion 22, a radially inwardly rising fitting-side wall portion 29 is formed which is configured to oppose the protrusion-side wall portion 28 with the second protruding portion 20 fitted in the second fitting portion 22. The axial length of the second fitting portion 22 is smaller than the axial length of the second protruding portion 20. The two second fitting portions 22 are formed, respectively, on two diametrically opposed ones of the four first fitting portions 21, which are arranged at 90-degree angular intervals, corresponding to the positions of the two second protruding portions 20, and the remaining two first fitting portions 21 are free of the second fitting portion.

Each insertion channel 26 and the corresponding second fitting portion 22 extend parallel to and adjacent to each other. Between the insertion channel 26 and the second fitting portion 22, a radially inwardly protruding partition protrusion 30 is formed to separate the insertion channel 26 from the second fitting portion 22. The circumferential width of the partition protrusion 30 is substantially equal to the circumferential width of the second fitting portion 22. On the circumferential end surface of the insertion channel 16 that defines the partition protrusion 30, a fillet (rounded portion) 31 is formed such that a small gap forms between the outer peripheral surface of the valve body 10 and the partition protrusion 30 when the coupling 11 is connected to the valve body 10. Instead of the fillet 31, a chamfer may be formed.

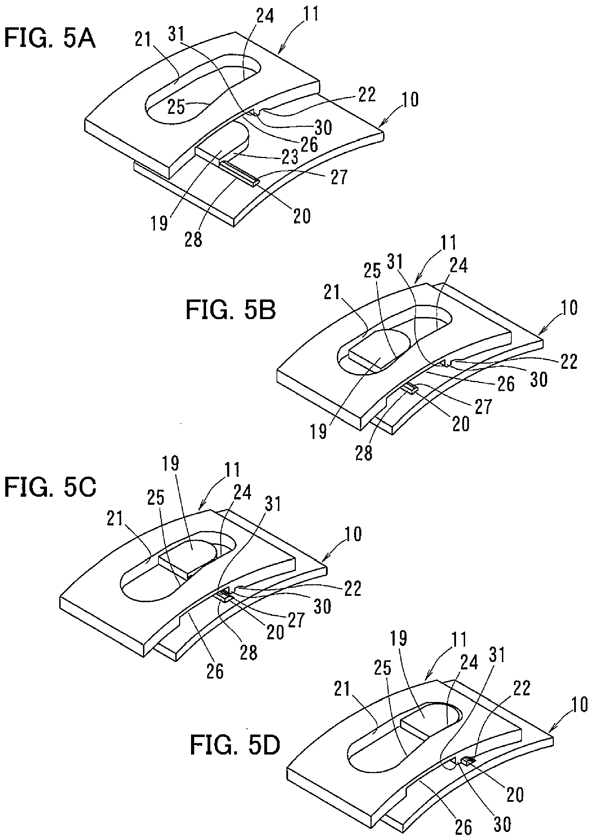

Now referring to Figs. 5A to 5D, it is described how the valve assembly A is assembled. First, the ball valve 13 is placed in the valve body 10 so as to be rotated by the rotary shaft 14, and the seal member 18 is attached to the rotary shaft 14. Then, from the side of the connecting end portion 12 of the valve body 10, the seat packing 15 and the seal members 16 and 17 are mounted (see Fig. 1).

Next, the first protruding portions 19, formed on the valve body 10, are passed through the insertion channels 26 of the coupling 11 and inserted into the first fitting portions 21 of the coupling 11 (see Fig. 5A). Since the first fitting portions 21 are open to the outer peripheral surface of the coupling 11, it is possible to visually and directly confirm how the first protruding portions 19 are inserted in the first fitting portions 21. Further, since each second protruding portion 20 is integrally formed on the back side of the first protruding portion 19 with respect to the insertion direction of the first protruding portion (i.e., within the projected range of the first protruding portion 19 in the insertion direction of the first protruding portion 19), the second protruding portions 20 are less likely to contact the coupling 11 when the valve body 10 and the coupling 1 are connected to each other, which in turn prevents damage to the second protruding portions 20.

Once the first protruding portions 19 are entirely inserted into the first fitting portions 21, the valve body 10 and the coupling 11 are rotated relative to each other about the axis thereof to move the first protruding portions 19 in the fitting direction in the first fitting portions 21 (see Fig. 5B). At this time, while the valve body 10 and the coupling 11 are biased in the direction away from each other by the seal members 16 and 17 disposed, respectively, between the valve body 10 and the coupling 11, and between the seat packing 15 and the coupling 11, because the taper 25 is formed on the inner surface of a respective one of the first fitting portions 21 and the first protruding portions 19 each have a semi-circular shape on the one end side, the first protruding portion 19 is smoothly guided by the taper 25 toward the fitting position (right end of the first fitting portion 21). The shape of the first protruding portion 19 may be selected from various other shapes, such as a tapered shape, provided the first protruding portion 19 can be smoothly guided.

While, during fitting, the first protruding portions 19 may abut hard against the inner edges of the first fitting portions 21, because the inner peripheral edges of the first fitting portions 20 are rounded, local stress concentration at the inner peripheral edges is avoided, and cracks and other trouble at the inner peripheral edges are prevented.

While each first protruding portion 19 is being guided toward the first fitting portion 21, the second protruding portion 20 reaches the circumferential end of the insertion channel 26 (i.e., reaches the partition protrusion 30) (see Fig. 5C). Then, the distal edge of the inclined portion 27 formed on the second protruding portion 20 is inserted under a radially inner portion of the partition protrusion 30, thereby temporarily radially expanding the portion of the coupling 11 adjacent to the second fitting portion 22. This allows smooth fitting of the second protruding portion 20 to the second fitting portion 22. The fillet 31 formed on the insertion channel 26 allows even more smooth fitting.

Because only two second protruding portions 20 are formed on the connecting end portion 12 of the valve body 10 at angular intervals of 180 degrees in the circumferential direction, the coupling 11 is expanded only in one diametrical direction along which the second fitting portions 22 are located, the coupling 11 can be smoothly radially expanded.

Because the second fitting portions 22 are each formed in the vicinity of the tunnel-shaped insertion channel 26 partitioned by the partition protrusion 30, and the first fitting portion 21 extending to the outer peripheral surface of the coupling 11, the ceiling portion (bridge portion) of the tunnel ensures predetermined rigidity around the first fitting portion 21, while allowing predetermined deformation in the vicinity of the second fitting portion 22 in which the second protruding portion 20 is fitted. Thus, the first protruding portion 19 and the second protruding portion 20 can be smoothly fitted to the first fitting portion 21 and the second fitting portion 22, respectively.

When the valve body 10 and the coupling 11 are rotated relative to each other about the center axis until each first protruding portion 19 is fitted to the fitting position of the first fitting portion 21 (right end of the first fitting portion 21), the second protruding portion 20 is fitted to the second fitting portion (see Fig. 5D). Since the axial lengths of the second fitting portions 22 are set smaller than the axial lengths of the second protruding portions 20, with the fitting completed, the tips of the second protruding portions 20 protrude out of the second fitting portions 22. This allows easy visual confirmation of the completion of the fitting.

When, with the first protruding portions 19 and the second protruding portions 20 fitted, respectively, to the first fitting portions 21 and the second fitting portions 22, the valve body 10 and the coupling 11 are rotated relative to each other in the opposite direction to the above, the protrusion-side wall portion 28 formed on each second protruding portion 20 abuts the fitting-side wall portion 29 formed on the respective groove-shaped second fitting portion 22 (see Fig. 2C), thereby preventing the above relative rotation in the opposite direction. Moreover, the ceiling (bridge portion) of the tunnel increases rigidity, and also, the abutting force between protrusion-side wall portion 28 and the fitting-side wall portion 29 acts only in the circumferential direction, and hardly in the radial direction. Thus, there is no possibility of the fitting between the second protruding portion 20 and the second fitting portion 22 being unexpectedly released due to radially outward deformation of the portion of the coupling 11 near the second fitting portion 22. This ensures reliable lock between the valve body 10 and the coupling 11, thereby preventing loosening of the connection between the valve body 10 and the coupling 11 due to their relative rotation about their axis.

Also, in the valve assembly A, by utilizing the above-described connecting structure, compared to an arrangement in which the valve body 10 and the coupling 11 are connected together by screws, they can be connected together in a simplified manner. Moreover, because, with the first protruding portions 19 and the first fitting portions 21 fitted together, the wall portions 23 of the first protruding portions 19 and the wall portions 24 of the first fitting portions 21 are configured to be in surface contact with each other, the valve body 10 and the coupling 11 can be set in an intended axial positional relationship with each other. Thus, compared to the arrangement in which valve body 10 is screwed into the coupling 11, because the compressed amounts of the seal members 16 and 17 disposed between the valve body 10 and the coupling 11 can be set to predetermined amounts, uniform valve performance is ensured.

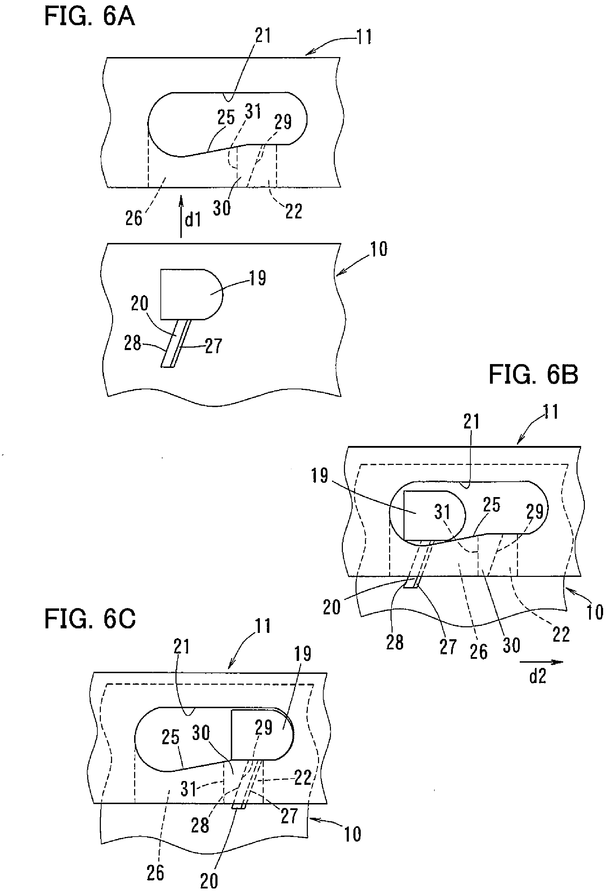

Fig. 6A to 6C show another example of a portion of the valve shown in Fig. 1. The portion shown of this example is common, in basic structure, to that shown in Fig. 1, but differs therefrom in that the second protruding portion 20, and the fitting-side wall portion 29 of the second fitting portion 22 which the wall portion 28 of the second protruding portion 20 abuts are inclined at small angles relative to the insertion direction of the first protruding portion 19 into the first fitting portion 21. In this arrangement too, as with the arrangement shown in Figs. 2A to 2C, when, with the first protruding portion 19 and the second protruding portion 20 fitted, respectively, in the first fitting portion 21 and the second fitting portion 22, the valve body 10 and the coupling 11 are rotated relative to each other in the direction opposite to the fitting direction, the protrusion-side wall portion 28 abuts the fitting-side wall portion 29, thereby preventing relative rotation in the opposite direction. Further, since each second protruding portion 20 is integrally formed on the back side of the first protruding portion 19 with respect to the insertion direction of the first protruding portion (i.e., within the projected range of the first protruding portion 19 in the insertion direction of the first protruding portion 19), the second protruding portions 20 are less likely to contact the coupling 11 when the valve body 10 and the coupling 11 are connected together, which in turn prevents damage to the second protruding portions 20.

Further, since the second protruding portion 20 is inclined relative to the partition protrusion 30, when the distal edge of the inclined portion 27 formed on the second protruding portion 20 is inserted under the radially inner portion of the partition protrusion 30, the opposed surfaces of the second protruding portion 20 and partition wall 30 do not simultaneously contact each other along the entire axial lengths thereof. Thus, elastic deformation gradually progresses in the vicinity of the partition protrusion 30, so that the second protruding portion 20 can be smoothly fitted into the second fitting portion 22. In the example of Figs. 6A to 6C, the second protruding portion 20 is inclined in the direction opposite to the fitting direction (shown by the arrow d2 in Fig. 6B) toward its tip. However, the same benefit would be expected from the arrangement in which the second protruding portion 20 is inclined in the fitting direction toward its tip.

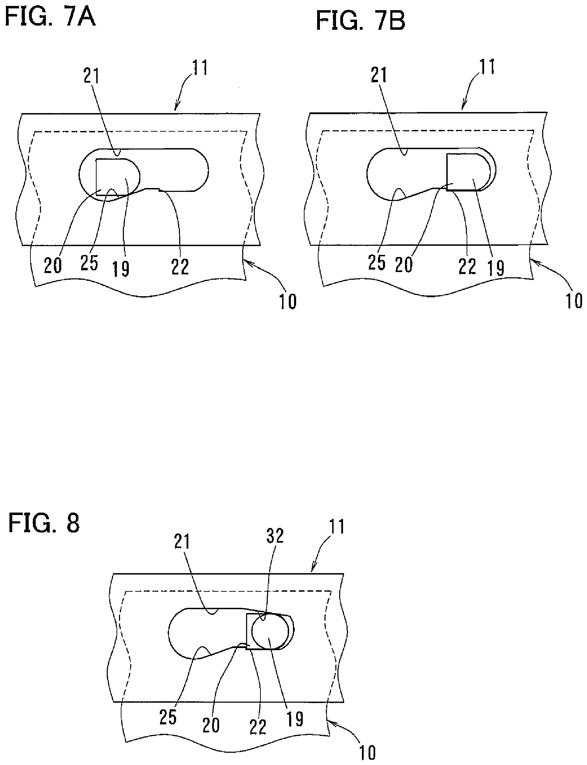

Figs. 7A to 7C shows a modified example of the connecting structure shown in Figs. 2A to 2C. This modified example is the same as the above-described structure in that the first protruding portions 19 formed on the valve body 10 are fitted to the first fitting portions 21 formed on the coupling 11. However, the structures of the second protruding portions 20 and the second fitting portions 22 differ from the above-described structures. That is, in this modified example, the second protruding portions 20 each comprise an angular corner integrally formed at the rear (in the fitting direction) end of the first protruding portion 19, and the second fitting portions 22 each comprise a step formed on the inner edge (on the connecting side to the valve body 10) of the first fitting portion 21.

In the connecting structure of this modified example, the first protruding portions 19 formed on the valve body 10 are each inserted through the insertion channel 26 formed in the coupling 11 into the first fitting portion 21. Then the valve body 10 and the coupling 11 are rotated relative to each other about their axis to move the first protruding portions 19 in the circumferential direction in the respective first fitting portions 21 (see Fig. 7A). At this time, as with the above-described structure, although the valve body 10 and the coupling 11 are biased in the direction away from each other under the elastic force of the seal member 16 and 17 (not shown in Figs. 7A and 7B), the taper 25 formed on the inner surface of the respective first fitting portion 21 smoothly guides the first protruding portion 10 toward the fitting position (right end of the first fitting portion 21).

When the first protruding portion 19 reaches the fitting position of the first fitting portion 21, the second protruding portion 20 formed at the rear end of the first protruding portion 19 engages the inner side of the second fitting portion 22 (step) under the elastic force of the seal members 16 and 17 (see Fig. 7B). In this state, the second fitting portion 22 prevents the return movement of the second protruding portion 20 (first protruding portion 19), i.e., prevents separation thereof from the engaged position.

Fig. 8 shows a modified example of the connecting structure shown in Figs. 7A and 7B. In this modified example, on the side of the inner edge of the first fitting portion 21 opposite from its side where the second fitting portion 22 is formed, a taper 32 is formed such that the axial width of the first fitting portion 21 decreases toward the fitting position. The taper 32 guides the first protruding portion 19 such that the first protruding portion 19 is displaced toward the second fitting portion 22 as it moves toward the fitting position of the first fitting portion 21. This enables the second fitting portion 22 to more easily fix the second protruding portion 20.

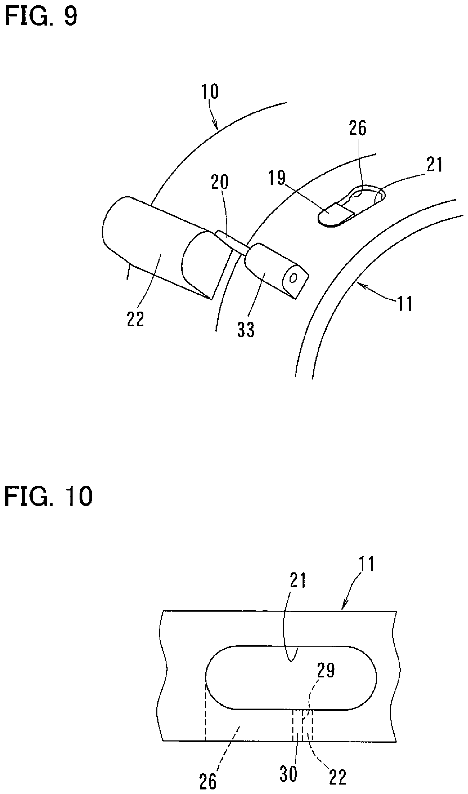

Fig. 9 shows a further modified example of the connecting structure shown in Figs. 2A to 2C. This modified example is the same as the above-described structure in that the first protruding portions 19 are formed on the valve body 10, and the first fitting portions 21 are formed on the coupling 11. However, the structures of the second protruding portions 20 and the second fitting portions 22 differ from the above-described structures. That is, in this further modified example, the second protruding portions 20 are engaging pins which are separate members from the first protruding portions 19, and can be each inserted into and pulled out of a pin hole formed in a pin retaining portion 33 formed on the outer peripheral surface of the coupling 11. The second fitting portions 22 are engaging protrusions formed on the outer peripheral surface of the connecting end portoin12 of the valve body 10.

After connecting the valve body 10 and the coupling 11 to each other by fitting the first protruding portions 19 to the first fitting portions 21, the second protruding portions 20 (engaging pins) are each inserted into the pin hole of the respective pin retaining portion 33, and its tip protruding out of the pin hole is fitted to the second fitting portion 22 (engaging protrusion). This arrangement prevents the valve body 10 and the coupling 11 from rotating in the reverse direction relative to each other, thus ensuring a reliable locking state between the valve body 10 and the coupling 11.

Fig. 10 shows another modified example of the connecting structure shown in Figs. 2A to 2C. In the above-described respective structures, the seal members 16 and 17 are disposed between the valve body 10 and the coupling 11, and by connecting the valve body 10 and the coupling 11 to each other against the elastic force of the seal members 16 and 7, the valve body 10 and the coupling 11 are biased in the direction away from each other. Thus, the taper 25 is formed on the inner surface of each first fitting portion 21 to smoothly guide the first protruding portion 19 toward the fitting position (right end of the first fitting portion 21). If the seal members 16 and 17 are not used, however, because it is not necessary to consider their elastic force, the taper 25 may be omitted. This configuration is shown in Fig. 10. In this configuration, to ensure that the first protruding portions 19 are each fitted in the first fitting portion 21 at its fitting position (right end of the first fitting portion 21), the axial width of first protruding portion 19 and the axial width of the first fitting portion 21 need to be equal to each other.

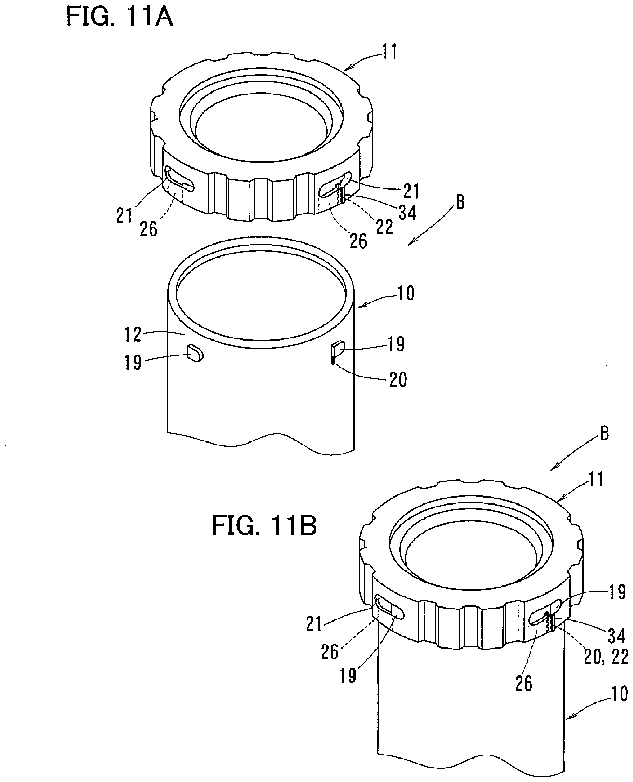

Another usage of the connecting structure according to the present invention is described. For example, this connecting structure can be used for a container B shown in Figs. 11A and 11B. The container B includes a container body as the first member 10 (the same numeral "10" is hereinafter used for the container body), and a lid as the second member 11 (the same numeral "11" is hereinafter used for the lid). The container body 10 has a cylindrical connecting end portion 12 (having an opening), and the lid 11 is connected to the connecting end portion 12.

On the outer peripheral surface of the connecting end portion 12 of the container body 10, the first protruding portions 19 and the second protruding portions 20, both protruding radially outward, are formed. The first fitting portions 21 and the second fitting portions 22 are formed on the lid 11. Further, display portions 34 are formed on the outer peripheral surface of the lid 11, corresponding, respectively, to the positions of the second fitting portions 22. When the container body 10 and the lid 11 are rotated relative to each other about their axis until the second protruding portions 20 are fitted to the second fitting portions 22, the tips of the second protruding portions 20 protrude out of the second fitting portions 22. Thus, by visually confirming that the circumferential positions of the display portions 34 coincide with the circumferential positions of the protruding tip portions of the respective second protruding portions 20, it is possible to easily determine that the fitting has completed. The shapes and functions of the first protruding portions 19, the second protruding portions 20, the first fitting portions 21, and the second fitting portions 22 are the same as those described above regarding the valve assembly A. Thus, their description is omitted.

For example, while the present invention was described where the connecting structure of the present invention is used for the valve assembly A and the container B, this connecting structure can be used for various other configurations where two members are connected together in a locked state.

### [DESCRIPTION OF THE REFERENCE SYMBOLS]

10. First member (valve body, container body)
11. Second member (coupling, lid)
12. Connecting end portion
13. Ball valve
14. Rotary shaft
15. Seat packing
16, 17. Elastic member (seal member)
18. Seal member
19. First protruding portion
20. Second protruding portion
21. First fitting portion
22. Second fitting portion
23. Wall portion (of the first protruding portion)
24. Wall portion (of the first fitting portion)
25. Taper
26. Insertion channel
27. Inclined portion
28. Protrusion-side wall portion
29. Fitting-side wall portion
30. Partition protrusion
31. Fillet
32. Taper
33. Pin retaining portion
34. Display portion
A. Valve
B. Container

## Claims

1. A connecting structure for connecting, to a connecting end portion (12) of a first member (10), a second member (11), the connecting structure comprising the first member (10) and the second member (11), wherein
a first protruding portion (19) and a first fitting portion (21) are formed, respectively, on the connecting end portion (12) and the second member (11) such that, with the first protruding portion (19) fitted to the first fitting portion (21), separation of the first member (10) from the second member (11) is prevented,
wherein a second protruding portion (20) and a second fitting portion (22) are formed, respectively, on the connecting end portion (12) and the second member (11), such that, with the first protruding portion (19) fitted to the first fitting portion (21), the second protruding portion (20) is inseparably fitted to the second fitting portion (22) so as to keep the first protruding portion (19) fitted to the first fitting portion (21),
wherein the first protruding portion (19) is fitted to the first fitting portion (21) by displacing the first member (10) and the second member (11) relative to each other, first in an insertion direction in which the first protruding portion (19) is inserted into the first fitting portion (21), and then in a fitting direction which is different from the insertion direction, and in which the first protruding portion (19) is fitted to the first fitting portion (21),
wherein the connecting structure further comprises a tunnel-shaped insertion channel (26) connected to the first fitting portion (21) and extending in the insertion direction, such that the first protruding portion (19) is inserted into the first fitting portion (21) through the insertion channel (26),
wherein the first fitting portion (21) is a through hole extending to an outer surface of the second member (11),
wherein the second fitting portion (22) is formed adjacent to the tunnel-shaped insertion channel (26),
wherein the second protruding portion (20) is a rib extending from the first protruding portion (19) in a direction opposite from the insertion direction of the connecting end portion (12), and the second fitting portion (22) is a groove extending along the second protruding portion (20), and
wherein, between the tunnel-shaped insertion channel (26) and the second fitting portion (22), a radially inwardly protruding partition protrusion (30) is formed to separated the tunnel-shaped insertion channel (26) from the second fitting portion (22), wherein the second protruding portion (20) has an inclined portion (27) of which the radially outward protruding amount decreases toward its circumferential end and wherein, while each first protruding portion (19) is being guided toward the first fitting portion (21), the second protruding portion (20) reaches the partition protrusion (30), wherein the distal edge of the inclined portion (27) formed on the second protruding portion (20) is inserted under a radially inner portion of the partition protrusion (30), thereby temporarily radially expanding the portion of the coupling (11) adjacent to the second fitting portion (22) and thus allowing smooth fitting of the second protruding portion (20) to the second fitting portion (22).

2. The connecting structure of claim 1, wherein the second protruding portion (20) is formed integrally with the first protruding portion (19) on the opposite side of the insertion direction in which the first protruding portion (19) is inserted into the first fitting portion (21).

3. The connecting structure of claim 1 or 2, the second fitting portion (22) is a step formed on a portion of an inner edge of the first fitting portion (21) on the connecting side to the first member (10).

4. The connecting structure of any of claims 1 to 3, wherein on the portion of the inner edge of the first fitting portion (21) on the connecting side to the first member (10), a taper (25) is formed such that the width of the first fitting portion (21) in the insertion direction decreases in the fitting direction.

5. The connecting structure of claim 1, wherein the second protruding portion (20) has, on the side of the fitting direction, an inclined portion (27) of which the radially outward protruding amount decreases toward its end, and on the opposite side in the fitting direction, a radially outwardly rising protrusion-side wall portion (28) is formed, and
wherein, the second fitting portion (22) has a fitting-side wall portion (29) which is, with the second fitting portion (22) extending along the second protruding portion (20), and with the second protruding portion (20) fitted to the second fitting portion (22), configured to be opposed to the protrusion-side wall portion (28).

6. The connecting structure of any of claims 1 to 5, wherein the first fitting portion (21) has an inner peripheral edge thereof rounded.

7. The connecting structure of any of claims 1 to 6, further comprising an elastic member (16) disposed between the first member (10) and the second member (11) so as to bias the first member (10) and the second member (11) in a direction away from each other.

8. The connecting structure of any of claims 1 to 7, wherein the connecting end portion (12) is cylindrically shaped, and wherein, when the first member (10) and the second member (11) rotate relative to each other about an axis thereof until the first protruding portion (19) and the first fitting portion (21) are fitted together, the second member (11) is prevented from being axially pulled out of the first member (10).

## Patentansprüche

1. Verbindungsstruktur zum Verbinden eines zweiten Elements (11) mit einem Verbindungsendabschnitt (12) eines ersten Elements (10), wobei die Verbindungsstruktur das erste Element (10) und das zweite Element (11) aufweist, wobei
ein erster vorstehender Abschnitt (19) und ein erster Passabschnitt (21) jeweils an dem Verbindungsendabschnitt (12) und dem zweiten Element (11) ausgebildet sind, so dass, wenn der erste vorstehende Abschnitt (19) an dem ersten Passabschnitt (21) angebracht ist, eine Trennung des ersten Elements (10) von dem zweiten Element (11) verhindert wird,
wobei ein zweiter vorstehender Abschnitt (20) und ein zweiter Passabschnitt (22) jeweils an dem Verbindungsendabschnitt (12) und dem zweiten Element (11) ausgebildet sind, so dass, wenn der erste vorstehende Abschnitt (19) an dem ersten Passabschnitt (21) angebracht ist, der zweite vorstehende Abschnitt (20) untrennbar an dem zweiten Passabschnitt (22) angebracht ist, um den ersten vorstehenden Abschnitt (19) an dem ersten Passabschnitt (21) angebracht zu halten, wobei der erste vorstehende Abschnitt (19) an dem ersten Passabschnitt (21) angebracht wird, indem das erste Element (10) und das zweite Element (11) relativ zueinander verschoben werden, zuerst in einer Einführrichtung, in der der erste vorstehende Abschnitt (19) in den ersten Passabschnitt (21) eingeführt wird, und dann in einer Passrichtung, die sich von der Einführrichtung unterscheidet, und in der der erste vorstehende Abschnitt (19) an den ersten Passabschnitt (21) angepasst wird,
wobei die Verbindungsstruktur ferner einen tunnelförmigen Einführkanal (26) umfasst, der mit dem ersten Passabschnitt (21) verbunden ist und sich in der Einführrichtung erstreckt, so dass der erste vorstehende Abschnitt (19) durch den Einführkanal (26) in den ersten Passabschnitt (21) eingeführt wird,
wobei der erste Passabschnitt (21) ein Durchgangsloch ist, das sich zu einer Außenfläche des zweiten Elements (11) erstreckt,
wobei der zweite Passabschnitt (22) angrenzend an den tunnelförmigen Einführkanal (26) ausgebildet ist,
wobei der zweite vorstehende Abschnitt (20) eine Rippe ist, die sich von dem ersten vorstehenden Abschnitt (19) in einer Richtung entgegengesetzt zur Einführrichtung des Verbindungsendabschnitts (12) erstreckt, und der zweite Passabschnitt (22) eine Nut ist, die sich entlang des zweiten vorstehenden Abschnitts (20) erstreckt, und
wobei zwischen dem tunnelförmigen Einführkanal (26) und dem zweiten Passabschnitt (22) ein radial nach innen vorstehender Trennwandvorsprung (30) ausgebildet ist, um den tunnelförmigen Einführkanal (26) von dem zweiten Passabschnitt (22) zu trennen, wobei der zweite vorstehende Abschnitt (20) einen geneigten Abschnitt (27) aufweist, dessen radial nach außen vorstehender Betrag zu seinem Umfangsende hin abnimmt, und wobei, während jeder erste vorstehende Abschnitt (19) zum ersten Passabschnitt (21) geführt wird, der zweite vorstehende Abschnitt (20) den Trennwandvorsprung (30) erreicht, wobei die distale Kante des geneigten Abschnitts (27), der auf dem zweiten vorstehenden Abschnitt (20) ausgebildet ist, unter einem radial inneren Abschnitt des Trennwandvorsprungs (30) eingeführt wird, wodurch der Abschnitt der Kupplung (11) neben dem zweiten Passabschnitt (22) vorübergehend radial erweitert wird und somit ein reibungsloses Einpassen des zweiten vorstehenden Abschnitts (20) in den zweiten Passabschnitt (22) ermöglicht wird.

2. Verbindungsstruktur nach Anspruch 1, wobei der zweite vorstehende
Abschnitt (20) integral mit dem ersten vorstehenden Abschnitt (19) auf der gegenüberliegenden Seite der Einführrichtung ausgebildet ist, in der der erste vorstehende Abschnitt (19) in den ersten Passabschnitt (21) eingeführt wird.

3. Verbindungsstruktur nach Anspruch 1 oder 2,
der zweite Passabschnitt (22) eine Stufe ist, die
an einem Abschnitt einer Innenkante des ersten Passabschnitts (21) an der Verbindungsseite zum ersten Element (10) ausgebildet ist.

4. Verbindungsstruktur nach einem der Ansprüche 1 bis 3, wobei an dem
Abschnitt der Innenkante des ersten Passabschnitts (21) auf der Verbindungsseite zum ersten Element (10) eine Verjüngung (25) ausgebildet ist, so dass die Breite des ersten Passabschnitts (21) in der Einführrichtung in der Passrichtung abnimmt.

5. Verbindungsstruktur nach Anspruch 1, wobei der zweite vorstehende
Abschnitt (20) auf der Seite der Einpassrichtung einen geneigten Abschnitt (27) aufweist, dessen radial nach außen vorstehender Betrag zu seinem Ende hin abnimmt, und auf der gegenüberliegenden Seite in der Einpassrichtung ein radial nach außen ansteigender vorsprungseitiger Wandabschnitt (28) ausgebildet ist, und
wobei der zweite Passabschnitt (22) einen passseitigen Wandabschnitt (29) aufweist, der so konfiguriert ist, dass er dem vorsprungseitigen Wandabschnitt (28) gegenüberliegt, wobei sich der zweite Passabschnitt (22) entlang des zweiten vorstehenden Abschnitts (20) erstreckt und der zweite vorstehende Abschnitt (20) an dem zweiten Passabschnitt (22) angebracht ist.

6. Verbindungsstruktur nach einem der Ansprüche 1 bis 5, wobei der erste Passabschnitt (21) eine abgerundete innere Umfangskante aufweist.

7. Verbindungsstruktur nach einem der Ansprüche 1 bis 6, die ferner
ein elastisches Element (16) aufweist, das zwischen dem ersten Element (10) und dem zweiten Element (11) angeordnet ist, um das erste Element (10) und das zweite Element (11) in einer Richtung voneinander weg vorzuspannen.

8. Verbindungsstruktur nach einem der Ansprüche 1 bis 7, wobei der
Verbindungsendabschnitt (12) zylindrisch geformt ist und wobei, wenn das erste Element (10) und das zweite Element (11) relativ zueinander um eine Achse davon rotieren, bis der erste vorstehende Abschnitt (19) und der erste Passabschnitt (21) zusammengefügt sind, das zweite Element (11) daran gehindert wird, axial aus dem ersten Element (10) herausgezogen zu werden.

## Revendications

1. Structure de connexion pour connecter, à une partie d'extrémité de connexion (12) d'un premier élément (10), un second élément (11), la structure de connexion comprenant le premier élément (10) et le second élément (11), dans laquelle une première partie saillante (19) et une première partie d'ajustement (21) sont formées, respectivement, sur la partie d'extrémité de connexion (12) et le second élément (11) de telle sorte que, une fois la première partie saillante (19) ajustée à la première partie d'ajustement (21), le premier élément (10) ne peut plus se déconnecter du second élément (11),
dans laquelle une seconde partie saillante (20) et une seconde partie d'ajustement (22) sont formées, respectivement, sur la partie d'extrémité de connexion (12) et le second élément (11), de sorte que, une fois la première partie saillante (19) fixée à demeure sur la première partie d'ajustement (21), la seconde partie saillante (20) est montée sur la seconde partie d'ajustement (22) de manière à maintenir la première partie saillante (19) montée sur la première partie d'ajustement (21), la première partie saillante (19) est fixée à la première partie d'ajustement (21) en déplaçant le premier élément (10) et le second élément (11) l'un par rapport à l'autre, d'abord dans une direction d'insertion dans laquelle la première partie saillante (19) est insérée dans la première partie d'ajustement (21), puis dans une direction d'ajustement différente de la direction d'insertion, dans laquelle la première partie saillante (19) est fixée à la première partie d'ajustement (21),
la structure de connexion comprend en outre un canal d'insertion en forme de tunnel (26) relié à la première partie d'ajustement (21) et s'étendant dans la direction d'insertion, de sorte que la première partie saillante (19) est insérée dans la première partie d'ajustement (21) à travers le canal d'insertion (26),
dans laquelle la première partie d'ajustement (21) est un trou traversant qui s'étend jusqu'à la surface extérieure du second élément (11),
dans lequel la seconde partie d'ajustement (22) est formée à côté du canal d'insertion en forme de tunnel (26),
dans laquelle la seconde partie saillante (20) est une nervure s'étendant à partir de la première partie saillante (19) dans une direction opposée à la direction d'insertion de la partie d'extrémité de connexion (12), et la seconde partie d'ajustement (22) est une rainure s'étendant le long de la seconde partie saillante (20), et
dans laquelle, entre le canal d'insertion en forme de tunnel (26) et la seconde partie d'ajustement (22), une saillie de séparation (30) faisant saillie radialement vers l'intérieur est formée pour séparer le canal d'insertion en forme de tunnel (26) de la seconde partie d'ajustement (22), dans laquelle la seconde partie saillante (20) comporte une partie inclinée (27) dont la saillie radialement vers l'extérieur diminue vers son extrémité circonférentielle et dans laquelle, alors que chaque première partie saillante (19) est guidée vers la première partie d'ajustement (21), la seconde partie saillante (20) atteint la seconde saillie de séparation (30), dans laquelle le bord distal de la partie inclinée (27) formée sur la seconde partie saillante (20) est inséré sous une partie radialement intérieure du canal d'insertion en forme de tunnel, la seconde partie saillante (20) atteint la saillie de séparation (30), le bord distal de la partie inclinée (27) formée sur la seconde partie saillante (20) étant inséré sous une partie radialement intérieure de la saillie de séparation (30), ce qui élargit temporairement la partie d'accouplement (11) adjacente à la seconde partie d'ajustement (22) et permet ainsi un ajustement en douceur de la seconde partie saillante (20) à la seconde partie d'ajustement (22).

2. Structure de connexion selon la revendication 1, dans laquelle la seconde partie saillante (20) est formée d'un seul tenant avec la première partie saillante (19) du côté opposé à la direction d'insertion dans laquelle la première partie saillante (19) est insérée dans la première partie d'ajustement (21).

3. Structure de connexion selon les revendications 1 ou 2, la seconde partie d'ajustement (22) est une étape formée sur une partie d'un bord intérieur de la première partie d'ajustement (21) du côté de la connexion au premier élément (10).

4. Structure de connexion selon l'une des revendications 1 à 3, dans laquelle, sur la partie du bord intérieur de la première partie d'ajustement (21) du côté de la connexion au premier élément (10), un cône (25) est formé de telle sorte que la largeur de la première partie d'ajustement (21) dans la direction d'insertion diminue dans la direction d'ajustement.

5. Structure de connexion selon la revendication 1, dans laquelle la seconde partie saillante (20) présente, du côté de la direction de montage, une partie inclinée (27) dont la saillie radiale vers l'extérieur diminue vers son extrémité, et du côté opposé dans la direction de montage , une partie de paroi côté saillie (28) s'élevant radialement vers l'extérieur est formée, et
dans laquelle la seconde partie d'ajustement (22) comporte une partie de paroi côté ajustement (29) qui, avec la seconde partie d'ajustement (22) s'étendant le long de la seconde partie saillante (20), et avec la seconde partie saillante (20) montée sur la seconde partie d'ajustement (22), est configurée pour être opposée à la partie de paroi côté saillie (28).

6. Structure de connexion selon l'une des revendications 1 à 5, dans laquelle la première partie d'ajustement (21) a un bord périphérique intérieur arrondi.

7. Structure de connexion selon l'une des revendications 1 à 6, comprenant en outre un élément élastique (16) disposé entre le premier élément (10) et le second élément (11) de manière à faire pencher le premier élément (10) et le second élément (11) dans une direction opposée l'un à l'autre.

8. Structure de connexion selon l'une des revendications 1 à 7, dans laquelle la partie terminale de connexion (12) est de forme cylindrique, et dans laquelle, lorsque le premier élément (10) et le second élément (11) tournent l'un par rapport à l'autre autour d'un axe jusqu'à ce que la première partie saillante (19) et la première partie d'ajustement (21) soient emboîtées, le second élément (11) ne peut pas se déconnecter axialement du premier élément (10).
